# EUROPEAN PATENT APPLICATION

(11) **EP 2 722 813 A1**
(43) Date of publication of application: **23.04.2014**
(21) Application number: 13189119.4
(22) Date of filing: 17.10.2013
(51) Int. Cl.: G06Q 50/20, G09B 7/00

(54) **Display device and method of controlling the display device**

(30) Priority: 19.10.2012 KR 20120116957
(71) Applicant: Samsung Electronics Co., Ltd, Gyeonggi-do 443-742 (KR)
(72) Inventor: Kim, In Ji, Gyeonggi-do (KR); Seol, Gyoung Chan, Seoul (KR); Ahn, Jae Hong, Gueonggi-do (KR); Ryu, Young Jun, Gyeonggi-do (KR); Lee, Yong Hoon, Gyeonggi-do (KR)
(74) Representative: Walaski, Jan Filip

(57) **Abstract**

A display device includes an input unit to receive a user message, a video output unit to display a plurality of agents, and an agent controller to analyze the user message and generate at least one agent message for at least one of the plurality of agents based on an analysis result of the user message. Different agent messages are generated for the plurality of agents. The display device may display the agent messages on the video output unit. If the display device includes an audio output unit, the agent messages may be output by voice.

## Description

The following description relates to a display device, a method of controlling the display device and an information processor to control the display device.

A display device is a device that visually outputs various types of data such as text, for example, or image content, such as a picture or a video to a user. Display devices include, for example, a television (TV) receiver, a computer monitor, portable terminals such as a cellular phone, a smart phone, a tablet PC and a portable game console.

A display device is equipped with an image output to provide a visual experience to a user. In addition, the display device has a sound output, for example, a speaker, to provide an auditory experience to the user. Therefore, the display device may display or reproduce image content uni-directionally to the user.

Meanwhile, the user controls the display device using a remote controller (remocon) that transfers a command to a specific button formed on the display device, a keyboard connected to the display device, an interface like a mouse, or the display device by infrared rays. As touch screens have recently been used in display devices, users may control the display devices by touching specific positions on the touch screens.

Therefore, it is an aspect of the present disclosure to provide a display device to display a plurality of agents capable of talking with a user on a screen and a method of controlling the display device and an information processor.

It is an aspect of the present disclosure to provide a display device controlled to allow at least one of a plurality of agents, matching a user's intention, to talk with a user and a method of controlling the display device.

It is an aspect of the present disclosure to provide an apparatus to enable a display device to accurately assess a user's intention in an interactive manner and thus control the display device according to the user's intention.

It is a further aspect of the present disclosure to provide a display device to provide the best agent to a user based on an environment including a user's preferences, needs, or habit.

Additional aspects of the invention will be set forth in part in the description which follows and, in part, will be obvious from the description, or may be learned by practice of the invention.

In accordance with an aspect of the present disclosure, a display device includes an input unit to receive a user message, a video output unit to display a plurality of agents, and an agent controller to analyze the user message and generate at least one agent message for at least one of the plurality of agents based on an analysis result of the user message. Different agent messages are generated for the plurality of agents.

The display device may further include an audio output unit to output voice or sound, and the agent controller may control display of the generated at least one agent message on the video output unit or may control output of the generated at least one agent message by voice through the audio output unit.

The agent controller may determine based on the analysis result of the user message whether the user message includes a device control command to control the display device.

The at least one agent message may include at least one query asking whether to perform an operation of the display device.

If it is determined based on the analysis result of the user message that the user message includes an answer to the query asking whether to perform an operation of the display device, the display device may be controlled to perform the operation.

The video output unit may display the plurality of agents after the input unit receives the user message.

The display device may further include a user identifier to identify a user by analyzing the user message.

The agent controller may select a plurality of agents according to the analysis result of the user message and prioritize the selected agents.

The agent controller may control display of the generated at least one agent message according to priority levels of the selected agents or may control sequential output of the generated at least one agent message by voice according to the priority levels of the selected agents.

After the at least one of the plurality of agents is selected based on the analysis result of the user message, the agent controller may generate the at least one agent message for the selected at least one agent.

The display device may further include an agent analyzer to analyze information about selection of the plurality of agents based on a selection result of the selected at least one agent.

The agent controller may select the at least one of the plurality of agents based on the analysis result of the agent analyzer and the analysis result of the user message and may generate the at least one agent message for the selected at least one agent.

The agent controller may control generation of agent messages for the plurality of agents and display of the agent messages on the video output unit or output of the agent messages by voice before the input unit receives the user message.

The display device may further include a power controller to control switching of the display device from standby mode to active mode by sensing the input of the user message.

The agent controller may generates agent message for the plurality of agents based on information about an ambient environment and agent feature information about the plurality of agents, and the agent feature information may include information about speech styles of the plurality of agents.

After the at least one agent message is output through the video output unit or by voice, the input unit may receive a user message and the agent controller may determine an agent corresponding to an agent message to which the user message is a response message from among the plurality of agents, based on the agent message and an analysis result of the response message.

The agent controller may display only the at least one agent corresponding to the generated at least one agent message on the video output unit.

In accordance with an aspect of the present disclosure, an information processor receives a user message from a display device that displays a plurality of agents to a user, analyzes a context of the received user message, selects at least one of the plurality of agents based on a context analysis result of the user message, generates at least one agent message for the selected at least one agent, and transmits information about the selected at least one agent and the at least one agent message to the display device. The at least one agent message is generated differently according to agent feature information about a speech style of the selected at least one agent.

In accordance with an aspect of the present disclosure, a display device includes an input unit to receive a user message, a video output unit to display a plurality of agents, and an agent controller to analyze a context of the received user message, select at least one of the plurality of agents based on a context analysis result of the user message, and generate at least one agent message for the selected at least one agent according to agent feature information about the selected at least one agent. The agent feature information about the selected at least one agent includes information about a speech style of the selected at least one agent.

In accordance with an aspect of the present disclosure, a display device includes a video output unit to display a plurality of agents, and an agent controller to generate different agent messages for the plurality of agents according to agent feature information about the plurality of agents, the agent feature information including information about speech styles of the plurality of agents.

The display device may further include an input unit to receive an agent selection command that selects at least one of the plurality of agents.

The agent controller may generate at least one agent message for the selected at least one agent according to speech feature information about the selected at least one agent. At least one of the agent messages may include at least one query about control of an operation of the display device and upon selection of an agent corresponding to the at least one agent message including at least one query, the operation of the display device may be performed.

The input unit may receive the user message by voice or through manipulation of a button and the agent controller may select at least one of the plurality of agents based on the user message and generate at least one agent message for the selected at least one agent based on speech feature information about the selected at least one agent.

In accordance with an aspect of the present disclosure, a method of controlling a display device includes displaying a plurality of agents, receiving a user message, analyzing the received user message, generating at least one agent message for at least one of the plurality of agents based on an analysis result of the user message, and controlling display of the generated at least one agent message on a video output unit or output of the generated at least one agent message by voice.

The method may further include determining based on the analysis result of the user message whether the user message includes a device control command to control the display device and, if the user message includes a device control command, controlling the display device according to the device control command.

The generated at least one agent message may include at least one query about control of an operation of the display device.

In accordance with an aspect of the present disclosure, a method of controlling a display device includes displaying a plurality of agents, receiving a user message, analyzing the received user message, determining an agent with which the user message is a dialogue message from among the plurality of agents based on an analysis result of the user message and selecting at least one of the plurality of agents based on a determination result, and generating at least one agent message for the selected at least one agent based on agent feature information about the selected at least one agent. The method further includes displaying the at least one agent message on a video output unit or outputting the at least one agent message by voice.

The method may further include prioritizing the selected at least one agent according to the analysis result of the user message, and controlling sequential display of the generated at least one agent message on a video output unit according to a priority level of the selected at least one agent, display of the generated at least one agent message at a position corresponding to the priority level of the selected at least one agent on the video output unit, or sequential output of the generated at least one agent message by voice according to the priority level of the selected at least one agent.

The method may further include generating selection result information about a result of selecting the at least one agent and generating agent analysis results for the plurality of agents by analyzing of the selection result information by selecting at least one of the plurality of agents or prioritizing the plurality of agents.

In accordance with an aspect of the present disclosure, a method of controlling a display device includes displaying at least one agent message or outputting the at least one agent message by voice, while displaying a plurality of agents, the at least one agent message including a query about control of an operation of the display device, receiving a user message by voice, through manipulation of a button, or by a screen touch, analyzing the received user message, and performing the operation, if it is determined from an analysis result of the user message that the user message is an operation control command regarding the operation of the display device.

The method may further include determining an agent with which the user message is a dialogue message from among the plurality of agents based on the analysis result of the user message, selecting at least one of the plurality of agents based on a determination result, and generating the at least one agent message based on agent feature information about the selected at least one agent.

In accordance with an aspect of the present disclosure, a method of controlling a display device includes displaying a plurality of agents, receiving a user message by voice, through manipulation of a button, or by a screen touch, analyzing the received user message, determining whether the user message includes a device control command to control the display device based on an analysis result of the user message, and controlling, if the user message includes a device control command, the display device according to the device control command and if the user message does not include a device control command, determining an agent with which the user message is a dialogue message from among the plurality of agents based on the analysis result of the user message, selecting at least one of the plurality of agents based on a determination result, and generating at least one agent message based on agent feature information about the selected at least one agent.

In accordance with an aspect of the present disclosure, a method of controlling a display device includes receiving a user message by voice, through manipulation of a button, or by a screen touch, displaying a plurality of agents in response to the reception of the user message, analyzing the received user message, determining an agent with which the user message is a dialogue message from among the plurality of agents based on an analysis result of the user message, selecting at least one of the plurality of agents based on a determination result, and generating at least one agent message based on agent feature information about the selected at least one agent.

In accordance with an aspect of the present disclosure, a method of controlling a display device includes receiving a user message for a plurality of agents displayed to a user by voice, through manipulation of a button, or by a screen touch, analyzing the received user message, determining an agent with which the user message is a dialogue message from among the plurality of agents based on an analysis result of the user message and an agent analysis result of the plurality of agents, selecting at least one of the plurality of agents based on a determination result, and generating at least one agent message based on agent feature information about the selected at least one agent. The agent analysis result of the plurality of agents is acquired by analyzing a user response to the agents or user selection of the agents.

In accordance with an aspect of the present disclosure, a method of controlling a display device includes generating a plurality of different agent messages for a plurality of agents according to agent feature information about the plurality of agents, the agent feature information including information about speech styles of the plurality of agents, and displaying the generated plurality of agent messages on the display device simultaneously with displaying the plurality of agents or outputting the generated plurality of agent messages by voice.

The method may further include receiving an agent selection command to select at least one of the plurality of agents by voice, through manipulation of a button, or by a screen touch.
The method may further include generating an agent message for the selected at least one agent according to speech feature information about the selected at least one agent.

The method may further include, if an agent message corresponding to the agent selected by the agent selection command includes a query about performing an operation of the display device, performing the operation of the display device.

The method may further include receiving a user message by voice or through manipulation of a button, and selecting at least one of the plurality of agents based on the user message and generating at least one agent message for the selected at least one agent according to speech feature information about the selected at least one agent. When the at least one of the plurality of agents is selected based on the user message, the received user message is analyzed, an agent with which the user message is a dialogue message is determined from among the plurality of agents based on an analysis result of the user message, the at least one of the plurality of agents is selected based on a determination result.

These and/or other aspects of the invention will become apparent and more readily appreciated from the following description of the embodiments, taken in conjunction with the accompanying drawings of which:
FIG. 1 is a conceptual view of a display device according to an embodiment of the present disclosure;
FIG. 2 illustrates the display device according to an embodiment of the present disclosure;
FIG. 3 is a block diagram of the display device according to an embodiment of the present disclosure;
FIG. 4 is a block diagram of the display device according to an embodiment of the present disclosure;
FIGS. 5A and 5B illustrate operations of the display device according to embodiments of the present disclosure;
FIG. 6 is a block diagram of the display device according to an embodiment of the present disclosure;
FIG. 7 is a block diagram of the display device according to an embodiment of the present disclosure;
FIG. 8 illustrates an operation of the display device according to a further embodiment of the present disclosure;
FIG. 9 is a block diagram of the display device according to a further embodiment of the present disclosure;
FIG. 10 is a flowchart illustrating a method of controlling the display device according to an embodiment of the present disclosure;
FIG. 11 is a flowchart illustrating a method of controlling the display device according to an embodiment of the present disclosure;
FIG. 12 is a flowchart illustrating a method of controlling the display device according to an embodiment of the present disclosure;
FIG. 13 is a flowchart illustrating a method of controlling the display device according to an embodiment of the present disclosure;
FIGS. 14 and 15 are flowcharts illustrating a method of controlling the display device according to an embodiment of the present disclosure;
FIG. 16 is a view referred to for describing a method of controlling the display device according to an embodiment of the present disclosure;
FIG. 17 is a flowchart illustrating a method of controlling the display device according to an embodiment of the present disclosure, in the case where a query message is included;
FIG. 18 is a flowchart illustrating a method of controlling the display device according to an embodiment of the present disclosure;
FIG. 19 is a view referred to for describing the method of controlling the display device illustrated in FIG. 18; and
FIGS. 20 and 21 are flowcharts illustrating methods of controlling the display device according to embodiments of the present disclosure.

Reference will now be made in detail to the embodiments of the present disclosure, examples of which are illustrated in the accompanying drawings, wherein like reference numerals refer to like elements throughout.

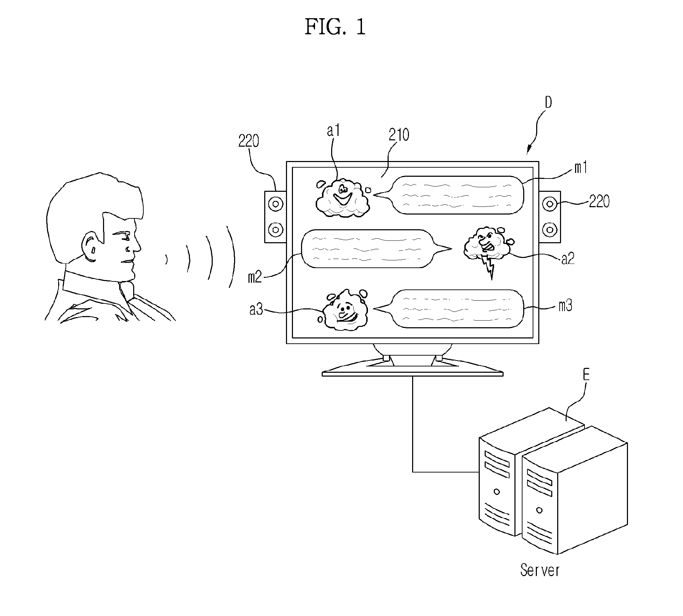

A description will be given of a display device according to various embodiments of the present disclosure with reference to FIGS. 1 to 9.

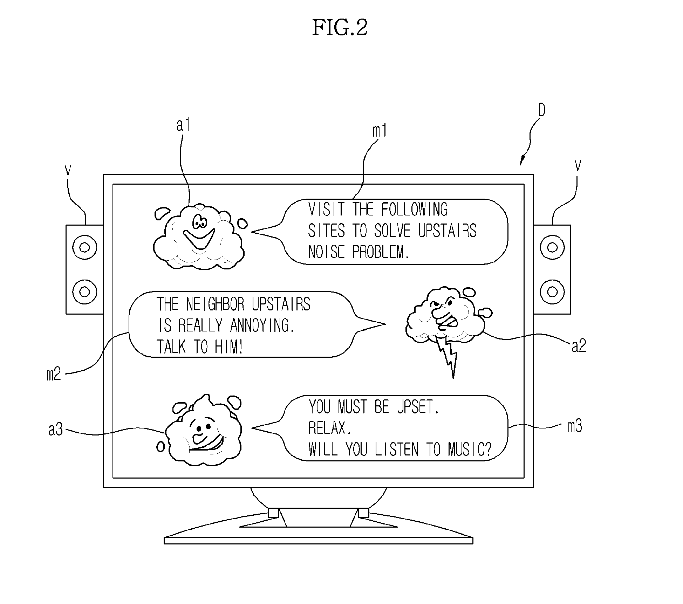

Referring to FIGS. 1 and 2, a display device D according to an embodiment of the present disclosure includes an agent output unit 200, which includes a video output unit 210 to display at least one agent a1, a2, and a3. An agent may appear as a still image or a video on a screen.
While the display device D of the present disclosure is shown as a TV in FIGS. 1 and 2, by way of example, the display device D is not limited to a TV. Other display devices such as a monitor, a cellular phone, a smart phone, a tablet PC, or a portable game console may be implemented as embodiments of the display device D. Further, other devices capable of receiving commands from a user through various user interfaces such as a microphone, a keyboard, a mouse, or a touch screen, for example, as well as displaying images may be implemented as embodiments of the display device D.

The agents a1, a2, and a3 refer to a messenger-based system to transfer necessary knowledge to a user by a natural language. The agents a1, a2, and a3 assess the user's intention by a dialogue and perform a specific operation according to the assessed user's intention.

The agents a1, a2, and a3 displayed on the screen of the video output unit 210 may be designed and displayed in a form familiar to the user, such as a character. If the video output unit 210 outputs a plurality of agents a1, a2, and a3, the agents a1, a2, and a3 may be the same character, similar characters as illustrated in FIG. 2, or different characters.

The agents a1, a2, and a3 may be still images without motion.

For example, if the agents a1, a2, and a3 are displayed as personified clouds as illustrated in FIGS. 1 and 2, different images may be assigned to the different agents a1, a2, and a3. For example, a smiling cloud image and a lightning cloud image may be assigned to the agents a1 and a2, respectively. The agents a1, a2, and a3 may be displayed without any change in the assigned images.

The agents a1, a2, and a3 may be, for example, moving, or animated, characters.
For example, if the agents a1, a2, and a3 are represented as personified clouds as illustrated in FIGS. 1 and 2, the mouths of the clouds may move in synchronization with output of agent messages, as if speaking, the sizes of the clouds may be changed in a predetermined pattern, or the agents a1, a2, and a3 may move in a predetermined or arbitrary direction or reciprocally along a predetermined route. In this case, when the display device D outputs agent messages, the agents a1, a2, and a3 may take a specific action on the screen under a predetermined condition, like lips speaking in synchronization with the output of the agent messages.
The video output unit 210 may further display a specific message, for example, at least one agent message m1, m2, and m3.

The agent messages m1, m2, and m3 are dialogue messages of the agents a1, a2, and a3, displayed in the form of text, symbols, or images. In some embodiments, upon receipt of user messages from the user, the video output unit 210 may output the agent messages m1, m2, and m3 in response to the user messages or without receiving any dialogue message from the user.

The agent messages m1, m2, and m3 may be generated based on a natural language that the user may readily use and understand.

When the agent messages m1, m2, and m3 are displayed on the screen of the display device D, the agent messages m1, m2, and m3 are displayed in speech bubbles so that the user may readily identify the agents a1, a2, and a3 that speak the displayed agent messages m1, m2, and m3, as illustrated in FIGS. 1 and 2.

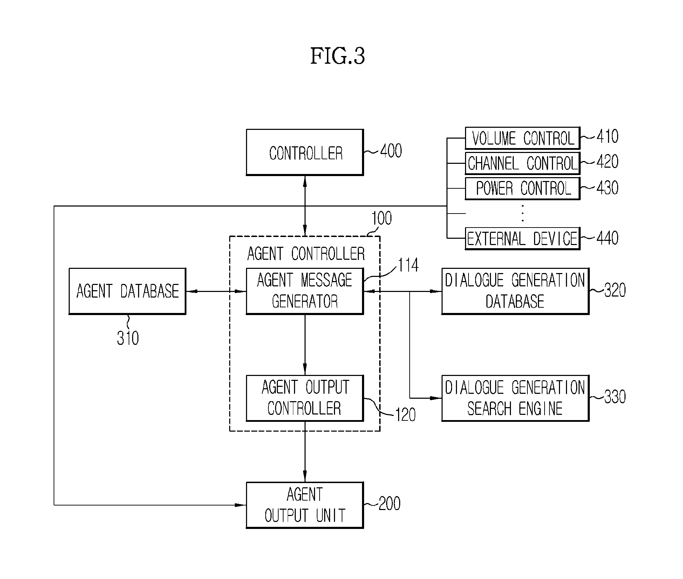

In an embodiment of the present disclosure, the agent messages m1, m2, and m3 displayed on the screen may be generated in an agent controller 100 illustrated in FIG. 3 or an external information processor E, for example, a server connected to the display device D by wire or wirelessly.

The display device D may further include an audio output unit 220, such as a speaker, for example, to output various sounds.

The display device D may output the at least one agent message m1, m2, and m3 corresponding to the at least one agent a1, a2, and a3 by sound or voice through the audio output unit 220. In this case, along with the at least one agent message output through the audio output unit 220, at least one agent message corresponding to the at least one audible agent message may or may not be displayed on the video output unit 210.

While not shown in FIGS. 1 and 2, the display D may further include an input unit to receive a dialogue message from the user. The input unit may receive an agent selection command to select at least one of a plurality of agents.
Depending on how the input unit receives a user message, the input unit may be, for example, a device to convert received external sound or voice to an electrical signal like a microphone, a touch screen to receive a specific message or command according to a touch input of the user, or a remote controller or keyboard to receive a specific message or command according to the user's manipulation of a button or key. Also, a user interface such as a laser pointer or mouse with which the user may point at a specific position and input a specific selection command at the pointed position may be an example of the input unit.

As illustrated in FIG. 3, the display device D may include the agent controller 100.

In an embodiment of the present disclosure, the agent controller 100, particularly an agent message generator 114 of the agent controller 100, may generate a dialogue message for each agent output to the video output unit 210. After the dialogue message is generated, the agent controller 100, particularly an agent output controller 120 of the agent controller 100, controls output of the generated agent message through the above-described video output unit 210 or audio output unit 220.

The agent controller 100 may control an agent displayed on the video output unit 210. For example, the agent controller 100 may change the graphics of the agent displayed on the video output unit 210 under a predetermined condition. The agent may take a variable shape over time. For example, a sun-shaped agent may be displayed in the daytime and a moon-shaped agent may be displayed at night. After weather information received from the external information processor E is checked, the agent may be personified into the sun, a cloud, rain, or snow, according to weather.

In an embodiment of the present disclosure, the agent controller 100 may control generation and output of an agent message and, at the same time, may control display of an agent on the video output unit 210 in correspondence with the output agent message. For example, if the output agent message delivers positive contents or funny contents, the agent controller 100 may control display of an agent making a laughing face or if the output agent message expresses anger or displeasure, the agent controller 100 may control display of an agent making an angry or unpleasant face. In addition, the agent controller 100 may control the agent to make a specific movement, for example, like animated speaking lips, for example, while outputting the agent message by voice or displaying the agent message.
In an embodiment of the present disclosure, the agent controller 100 may search a dialogue generation database 320 or use a dialogue generation search engine 330 in order to generate an appropriate agent message. For example, when the user inputs a user message, for example, a user message including a query about current weather through the input unit, the agent controller 100 may generate an agent dialogue based on information about the current weather detected by the dialogue generation search engine 330 to appropriately respond to the received user message, that is, to appropriately answer the query about the current weather.

In this case, the agent controller 100, particularly the agent message generator 114 may generate different agent messages m1, m2, and m3 for the plurality of agents a1, a2, and a3 displayed on the video output unit 210 in an embodiment of the present disclosure. For this purpose, the agent controller 100 may control the generation of the agent messages m1, m2, and m3 according to agent feature information of the agents a1, a2, and a3.

The agent feature information assigned to the agents a1, a2, and a3 includes information about the appearances, speech styles, expression changes, and personalities of the agents a1, a2, and a3. That is, the agent feature information is information about the personality traits of the respective agents a1, a2, and a3. Each agent may be assigned different feature information.

For example, one of the agents a1, a2, and a3 may have a practical personality and thus may provide a message including a realistic solution in response to a user's question. Another agent may have an emotional personality and thus may make a dialogue with the user in a manner that gives an emotional solution. Some agent may give a message expressing pleasure or sadness in sympathy with the user's emotion.

To be more specific, the agent controller 100 controls one of the agents a1, a2, and a3, for example, the first agent a1, to output a message carrying information needed for the user, for example, a message giving a solution as the message m1 and controls another agent, for example, the second agent a2, to output an emotionally relieving message, for example, a message expressing anger in sympathy with an offense that the user feels as the message m2, according to the agent feature information of the agents a1, a2, and a3. Further, the agent controller 100 may generate the messages m1, m2, and m3 of the agents a1, a2, and a3 in different speech styles. For substantially the same contents, the agent controller 100 may control one of the agents a1, a2, and a3, for example, the first agent a1, to output a message in a rational style and may control another agent, for example, the second agent a2, to output a message in an emotional style.

In an embodiment of the present disclosure, the display device D may further include an agent database 310 to store the afore-described agent feature information. The agent controller 100 may generate the agent messages m1, m2, and m3 matching the personality traits of the agents a1, a2, and a3 by referring to the agent database 310. The agent controller 100 may analyze a user message received from the input unit, for example, through the microphone and may generate an agent message based on the analysis result of the user message.

When needed, the agent controller 100 may generate a control command to perform a specific operation of the display device D, for example, an operation such as volume control 410, channel control 420, or power control 430, and may provide the control command to each module related to the volume control 410, the channel control 420, or the power control 430 directly or through a controller 400 that controls the module, so that the module may be controlled accordingly.

In an embodiment of the present disclosure as illustrated in FIG. 1, the display device D may be connected to the external information processor E through a wired or wireless network and thus may transmit or receive specific data to or from the external information processor E over the wired or wireless network.

In this case, the external information processor E may perform a part of the functions of the agent controller 100 or store the agent database 310 or the dialogue generation database 320, when needed. The external information processor E may also perform the function of the dialogue generation search engine 330.

For example, the external information processor E, for example, the server may generate messages for the agents a1, a2, and a3 or a control command to control the agents a1, a2, and a3 displayed on the screen and may transmit the message or the control command to the display device D. Further, when the user inputs a user message through the input unit of the display device D, for example, the microphone of the display device D, the external information processor E connected to the display device D through the wired or wireless communication network may receive the user message from the display device D, analyze the user message, select at least one of a plurality of agents based on the analysis result, generate an agent message for the selected agent, and transmit information about the selected agent and the generated agent message to the display device D.

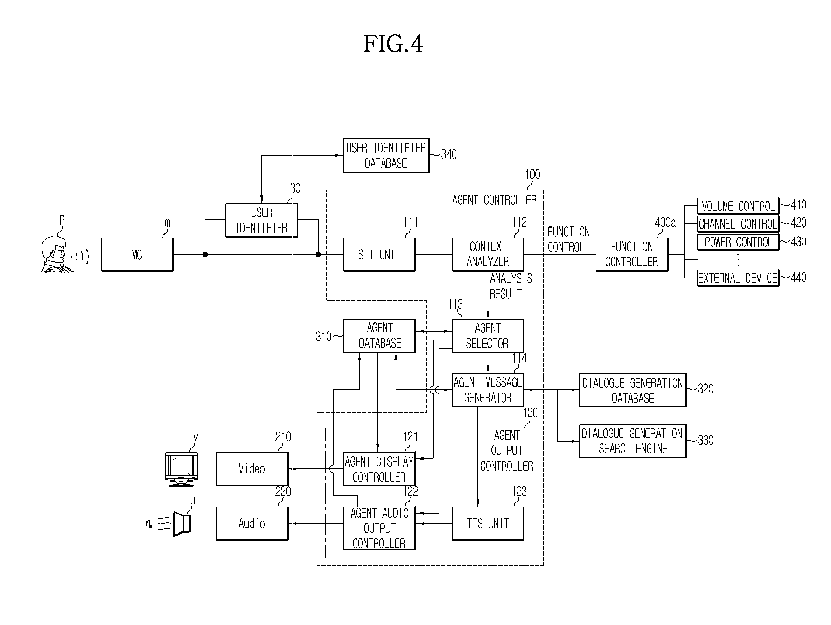

The display device D may display the selected agent on a screen or perform a predetermined operation based on the information about the selected agent and the agent message received from the external information processor E, for example, the server, and may output the agent message to the user by voice or on the screen. FIG. 4 is a block diagram of the display device D according to an embodiment of the present disclosure.

In the embodiment of the present disclosure, the agent controller 100 may include a Speech to Text (STT) unit 111, a context analyzer 112, an agent selector 113, the agent message generator 114, and the agent output controller 120.

Before or after an agent message is output, the user may input a voice user message through a microphone m, for example. If the user message is received a short time after an agent message generated in the agent message generator 114 is output, the user message is highly probable to be a response to the agent message.

Upon receipt of a user message through the microphone m in this manner, the STT unit 111 recognizes the received voice user message, converts the voice user message to a text message, and provides the text message to the context analyzer 112. That is, the STT unit 111 performs a speech-to-text function. The STT unit 111 may convert a user's voice message to a text message by any known STT technique. In this case, if it is determined that voice recognition is impossible or the voice message may not be recognized accurately due to inaccurate pronunciation of the user, a message prompting the user to re-input voice may be displayed through the video output unit 210 or output audibly through the audio output unit 220, or both.

The context analyzer 112 analyzes the text message received from the STT unit 111 using pre-stored words or phrases and provides the analysis result to the agent selector 113. In other words, the context analyzer 112 assesses the contents of the user message, that is, the user's intention by analyzing the context of the user message.
For example, the context analyzer 112 extracts words, for example, nouns or verbs from the text user message, analyzes the technical meanings of the extracted words or the relationship between the words, generates an analysis result, and provides the analysis result to the agent selector 113 or the agent message generator 114.

In some embodiments, the context analyzer 112 may analyze the context of the user message, while correcting errors such as wrong recognition of the text user message received from the STT unit 111. That is, the text user message may be different from the original message spoken by the user due to defective pronunciation of the user or a technical problem of the STT unit 111 or the microphone m. The context analyzer 112 may also analyze other words similar to the extracted words in terms of pronunciation or shape, taking into account the probability of such errors.

In an embodiment of the present disclosure, if the context analyzer 112 determines that the user message is a control command to control the display device D or an external device 440 based on the analysis result of the user message, the context analyzer 112 may transmit a signal to control the display device D to a function controller 400a. Then the function controller 400a generates control signals to control various functions, for example, signals for the volume control 410, the channel control 420, and the power control 430, and provide the control signals to function units. In an embodiment of the present disclosure, the function controller 400a may generate a control command to control an electronic appliance such as a refrigerator and may provide the control command to the electronic appliance to control the electronic appliance according to the user message.

The context analyzer 112 may analyze a message based on ontology.

The agent selector 113 determines an agent from among a plurality of agents, which has output an agent message to which the user message is a response based on the context analysis result of the context analyzer 112.

For example, if the plurality of agents a1, a2, and a3 and their agent messages m1, m2, and m3 are displayed on the video output unit 210 as illustrated in FIGS. 1 and 2, or if the plurality of agents a1, a2, and a3 are displayed on the video output unit 210 and the agent messages m1, m2, and m3 are output through the audio output unit 220, the user may input a response to at least one of the output agent messages m1, m2, and m3 through the microphone after reading or hearing the agent messages m1, m2, and m3. Then the agent selector 113 identifies at least one agent from among the agents a1, a2, and a3, which has output an agent message to which the user message is a response, based on the analysis result of the user message received through the microphone and analyzed by the STT unit 111 and the context analyzer 112 and selects the identified at least one agent.

In other words, the agent selector 113 determines an agent message from among the plurality of agent messages m1, m2, and m3 to which the user message responds and thus selects at least one of the agents a1, a2, and a3, accordingly.

The agent selector 113 may refer to the agent database 310 that stores information about the agents in order to select an agent. When needed, the agent selector 113 may select an agent other than the plurality of agents a1, a2, and a3 displayed on the screen as illustrated in FIGS. 1 and 2 from the agent database 310, according to the analysis result. In addition, the agent selector 113 may select an agent using the agent feature information about the personality traits of the agents a1, a2, and a3 stored in the agent database 310 and the context analysis result together.

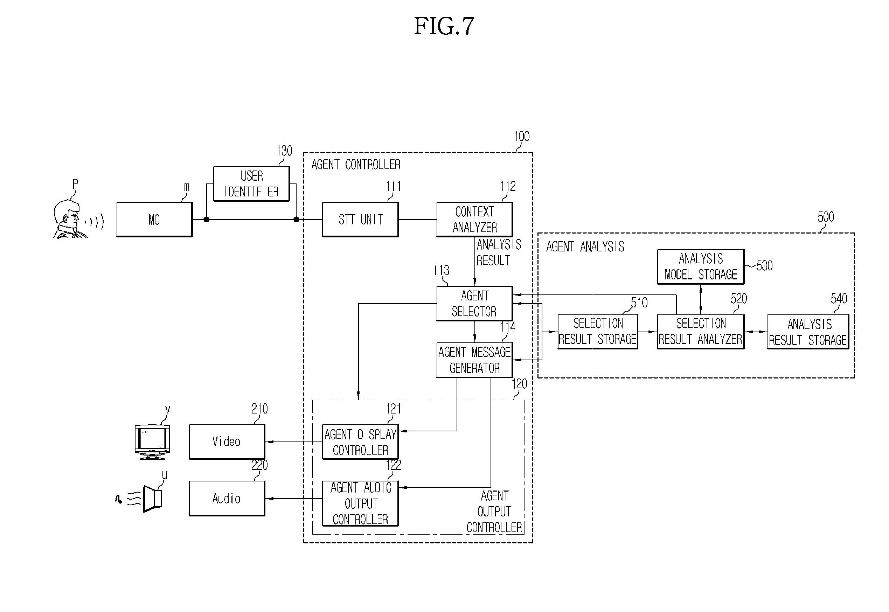

In an embodiment of the present disclosure, the agent selector 113 may select a plurality of agents, for example, the first and second agents a1 and a2 from among the agents a1, a2, and a3 displayed on the screen according to the analysis result of the user message. In this case, the agent selector 113 may select the agents a1 and a2 without discrimination or may prioritize the agents a1 and a2 in selecting them. The priority levels of the agents a1 and a2 may be determined, for example, according to the appropriateness of the user message as a response for the agents or the selection frequencies of the agents preliminarily analyzed by an agent analyzer 500 illustrated in FIG. 7 as described later.

The agent message generator 114 generates an agent message for at least one of the agents a1, a2, and a3, which is or is not displayed on the screen.

The agent message generator 114 may generate agent messages for all of the agents a1, a2, and a3 displayed on the screen or an agent message for at least one of the plurality of agents a1, a2, and a3, selected by the agent selector 113. In addition, the agent message generator 114 may generate an agent message for at least one agent that is not displayed on the screen but selected by the agent selector 113.

The agent message generator 114 generates an agent message that may be an appropriate response to the user message based on the analysis result of the context analyzer 112.

In an embodiment of the present disclosure, the agent message generator 114 may refer to the dialogue generation database 320 in order to generate an agent dialogue message suitable for the context based on the contents of the user message or the user's intention determined according to the context analysis result of the user message. For example, if the user inputs a message related to upstairs noise, the agent message generator 114 searches the dialogue generation database 320 for an upstairs noise solution or an external Web site to generate a message for the first agent a1 and outputs the message to the user through the video output unit 210 or the audio output unit 220. In an embodiment of the present disclosure, the agent message generator 114 may generate an agent message using the dialogue generation search engine 330. For example, when the user inputs a message related to upstairs noise, the dialogue generation search engine 330 may receive keywords based on the context analysis result, for example, 'upstairs AND noise AND solution', may collect and detect data needed for a keyword search, for example, materials related to upstairs noise, and may control the agent message generator 114 to generate an agent message based on the data. In this case, the dialogue generation search engine 330 may be, for example, a semantic search engine.

In a further embodiment of the present disclosure, the agent message generator 114 may generate an agent message using a probabilistic model such as a Bayesian network. The agent message generator 114 may generate a different agent message for each agent. As described before, the agent message generator 114 may generate different agent messages m1, m2, and m3 for the agents a1, a2, and a3 according to the agent feature information of the agents a1, a2, and a3, in terms of contents or speech style.
In other words, a plurality of agent messages output to the video output unit 210 or the audio output unit 220 may deliver different contents. In addition, the agent messages may deliver the same contents in different styles or different contents in different styles.
For example, when the user complains about upstairs noise, the first agent message m1 of the first agent a1 may be "Visit the following sites to solve the upstairs noise problem", thus giving a direct help to the user, as illustrated in FIG. 2. The second agent message m2 of the second agent a2 may be a critical statement or blame on the cause of the upstairs noise to give an emotional solution to the user. The third agent message m3 of the third agent a3 may deliver contents that emotionally relieve the user. When needed, a query asking the user to input a new control command, for example, a query asking for an execution command of a music program may be provided to the user.

As described above, once a dialogue is made with at least one agent based on a user message received through the microphone, the agent controller 100 outputs the dialogue through the agent output controller 120 visually or audibly.
The agent output controller 120 may include an agent display controller 121, an agent audio output controller 122, and a Text to Speech (TTS) unit 123, as illustrated in FIG. 4.

The agent display controller 121 controls display of at least one agent a1, a2 or a3 selected by the agent selector 113 on the video output unit 210. Upon selection of at least one of the agents a1, a2, and a3 displayed on the screen, the agent display controller 121 may control display of the selected agent on the screen, distinctively from the other agents.

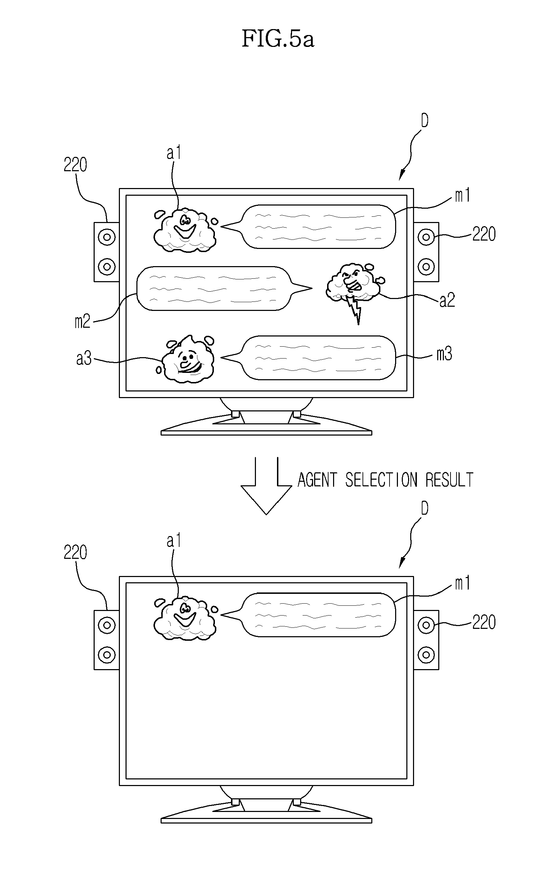

For example, when the first agent a1 is selected from among the plurality of agents a1, a2, and a3, only the first agent a1 may be displayed on the screen without the other agents a2, and a3, as illustrated in FIG. 5A.

The displayed first agent a1 may operate differently from the other agents a2 and a3. For example, the first agent a1 may move lips as if speaking, unlike the other agents a2 and a3. It is also possible to give a special effect to the first agent a1, when the first agent a1 is displayed.

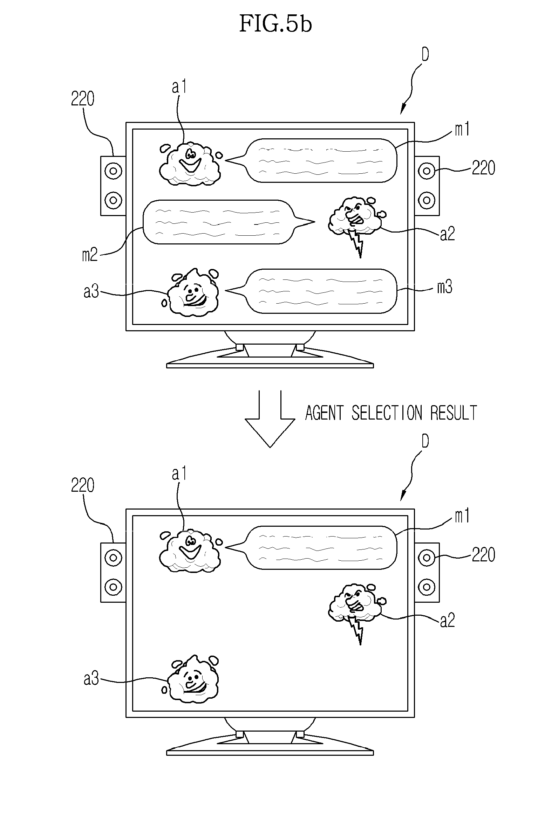

The agent display controller 121 may control display of the agent messages m1, m2, and m3 as well as the agents a1, a2, and a3.
For example, the plurality of agents a1, a2, and a3 may still be displayed on the screen, while only the agent message of the selected agent, for example, only the agent message m1 of the first agent a1 may be displayed on the screen, as illustrated in FIG. 5B.

The agent display controller 121 may also control the display positions of the output agents a1, a2, and a3 and the display positions of the agent messages m1, m2, and m3.

If the selected agents a1 and a2 are prioritized as described before, the display positions of the agents a1 and a2 may be changed or the agents a1 and a2 may be sequentially displayed on the screen according to their priority levels.

The agent audio output controller 122 controls output of an agent message generated from the agent message generator 114 by voice or sound through the audio output unit 220. In this case, the TTS unit 123 may convert the agent message to a voice message.

The TTS unit 123 converts a text agent message generated from the agent message generator 114 to a voice file, so that the agent audio output controller 122 may output a voice message. Then the agent audio output controller 122 outputs the voice file through the audio output unit 220 such as the speaker so that the user may hear the agent message.

The agent audio output controller 122 may sequentially output at least one agent message converted to voice by the TTS unit 123. In this case, the at least one message may be output in order of the priority levels assigned to the agents by the agent selector 113.

In some embodiments, when the audio output unit 220 outputs an agent message by voice, the agent display controller 121 may control display of an agent corresponding to the voice agent message on the screen in a different manner from the other agents. For example, only the first agent a1 may be displayed on the screen or the first agent a1 may operate as if speaking, as illustrated in FIG. 5A. It is also possible to display only the first agent a1 on the screen as illustrated in FIG. 5B. In this manner, the user may readily identify an agent corresponding to an agent message output by voice.

When an agent message is output by voice, the same message may be output on the video output unit 210 at the same time or at a different time point.
In an embodiment of the present disclosure, the display device D may further include a user identifier 130.

The user identifier 130 identifies a user by the pattern of the user's speech received through the microphone, for example, the user's accents or pronunciation, as illustrated in FIG. 4. In this case, the user identifier 130 compares the pattern of the received user's speech with data pre-stored in a user identification database 340, to thereby identify the user.

Once the user is identified by the user identifier 130, the STT unit 111 may convert the user's voice message to a text message more accurately based on the speech pattern of the identified user, such as the user's pronunciation and accents. Further, an optimum agent may be determined or an optimum agent message may be generated according to the user's selection pattern, response pattern, etc. during context analysis, agent determination, or agent message generation.

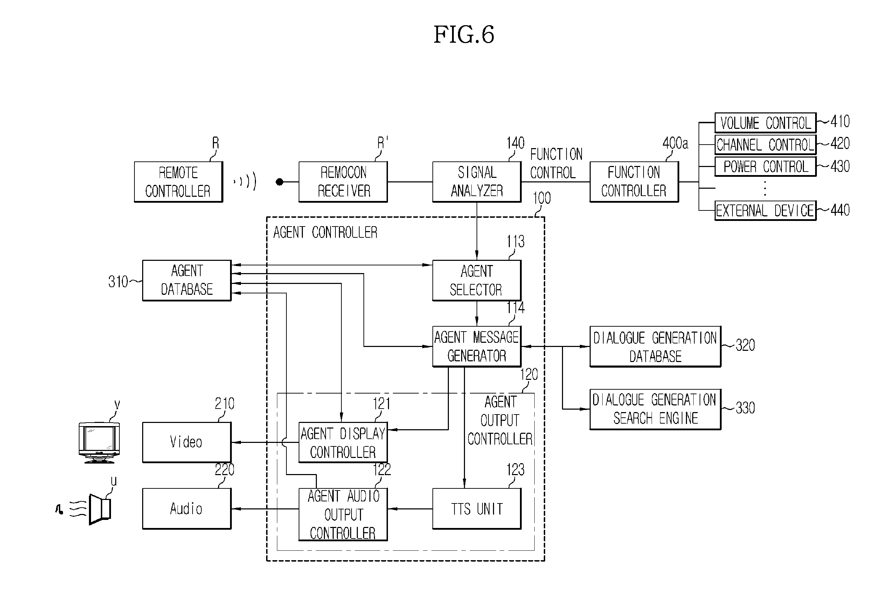

An embodiment of the display device D is illustrated in FIG. 6.

Referring to FIG. 6, the display device D may be controlled by a remote controller R, rather than by the user's voice as in the afore-described embodiment. In this case, the display device D may further include a remote controller receiver R' and a signal analyzer 140.

In an embodiment of the present disclosure, as the remote controller R includes an infrared generator and the remote controller receiver R' includes an infrared sensor, the display device D may be controlled remotely by infrared rays. In an embodiment of the present disclosure, each of the remote controller R and the remote controller receiver R' includes a wired/wireless communication module, for example, a wireless communication module using a short-range wireless communication technology such as Bluetooth or Wireless Fidelity (Wi-Fi) so that the display device D may be controlled remotely by wired/wireless communication.

When the plurality of agents a1, a2, and a3 are displayed on the video output unit 210 as illustrated in FIG. 2, the user may manipulate the remote controller R to select at least one of the plurality of agents a1, a2, and a3. Or the user may manipulate the remote controller R to execute functions of the display device D, for example, volume control or channel switching.

When the user manipulates a button of the remote controller R, for example, the infrared generator of the remote controller R generates infrared rays, and the infrared sensor of the remote controller receiver R' senses the infrared rays generated from the remote controller R and converts the sensed infrared rays to an electrical signal.

The signal analyzer 140 determines based on the electrical signal whether the user's manipulation of the remote controller R is intended to control a function of the display device D or to select an agent. In the former case, the signal analyzer 140 provides a signal to control a function to the function controller 400a. In the latter case, the signal analyzer 140 provides a signal to the agent selector 113. Then the agent selector 113 determines based on the signal received from the remote controller R what agent has been selected from among the plurality of agents displayed on the video output unit 210 and provides the selection result to the agent message generator 114 so that an agent message may be generated for the selected at least one agent.

An embodiment of the display device D is illustrated in FIG. 7.

Referring to FIG. 7, the display device D may further include the agent analyzer 500 in addition to the agent controller 100.

The agent analyzer 500 stores and analyzes the user's conscious or unconscious agent selection pattern based on information about an agent selected by the agent controller 100, particularly the agent selector 113. Then the agent analyzer 500 provides the analysis result to the agent controller 100 so that the agent selector 113 may use the analysis result in selecting an agent.

Specifically, the agent analyzer 500 may include a selection result storage 510, a selection result analyzer 520, an analysis model storage 530, and an analysis result storage 540 in an embodiment of the present disclosure.

The selection result storage 510 stores information about a selection made by the agent selector 113, that is, selection result information. When needed, the selection result storage 510 may store an agent message generated from the agent message generator 114.

If the user identifier 130 has identified users, the selection result storage 510 may store selection result information received from the agent selector 113 separately for the identified individual users. Each time a dialogue begins between a user and an agent, each time the user or the agent selector 113 selects at least one agent, or upon termination of a dialogue between an agent and the user, selection result information about the user may be stored.

The selection result analyzer 520 analyzes the selection result information stored in the selection result storage 510.

For example, the selection result analyzer 520 calculates the selection weight of each agent and thus induces a distribution result by analyzing various materials such as the selection number of each agent, for example, the first agent a1, the proportion of the selection number of the first agent a1 to a total selection number, an agent that has been selected most times, for example, in the recent one week, etc. In this case, it is possible to induce an analysis result for each identified user.

The selection result analyzer 520 may use various probabilistic models stored in the analysis model storage 530 in order to analyze selection result information. For example, the selection result analyzer 520 may calculate the correlation or probabilistic relationship between an output agent message and a user message responding to the output agent message using a Bayesian network based on given information regarding agent selection. Likewise, various machine learning techniques may be stored in the analysis model storage 530, for use in analyzing a selection result.

The analysis result of the selection result analyzer 520 is stored in the analysis result storage 540.

When the analysis result is stored, a weight may be assigned to the analysis result. For example, the weight of an analysis result may be arithmetically or exponentially proportional to the selection frequency of an agent associated with the analysis result. Thus, the agent selector 113 may select an agent having a higher weight with a higher probability.

The agent selector 113 may select an agent referring to the analysis result of agent selection analyzed by the agent analyzer 500. In other words, the agent selector 113 may select, for example, an agent having a high selection frequency with priority over the other agents based on the analysis result of each agent stored in the storage 540.

As the user uses the display device D, the agent analyzer 500 may select an optimum agent for the user.

When the display device D is initially used, the plurality of agent messages m1, m2, and m3 of the plurality of agents a1, a2, and a3 are output on the screen in response to a user message. If the user uses the display device D later, a specific agent may be frequently selected. For example, the first agent a1 may be selected frequently by the agent selector 113.

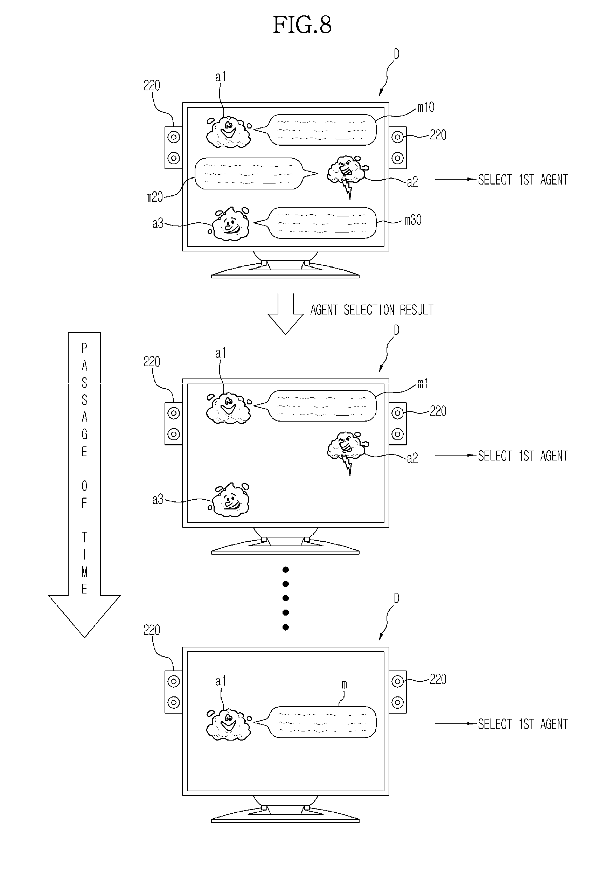

As the display device D is used for a long term, information about the results of agent selection is accumulated. Then, for example, an agent with a high selection frequency, for example, an agent with a selection frequency equal to or larger than approximately 80% as selected by the agent selector 113 may be output with priority or only the agent with the high selection frequency may be output. As illustrated in FIG. 8, for example, if the user or the display device D selects mainly the first agent a1, the other agents a2 and a3 with lower selection frequencies may not be displayed any longer, while only the first agent a1 may be displayed on a screen.

As an analysis result is generated based on information about the selection results of a plurality of agents and used in selecting an agent in this manner, only a specific agent (e.g. the first agent a1), for example, only an agent with a high selection frequency may be used in a dialogue with the user over a long term, as illustrated in FIG. 8. As a consequence, an agent optimized to the user may be determined with passage of time.

In some embodiments, the external information processor E may include the agent analyzer 500.

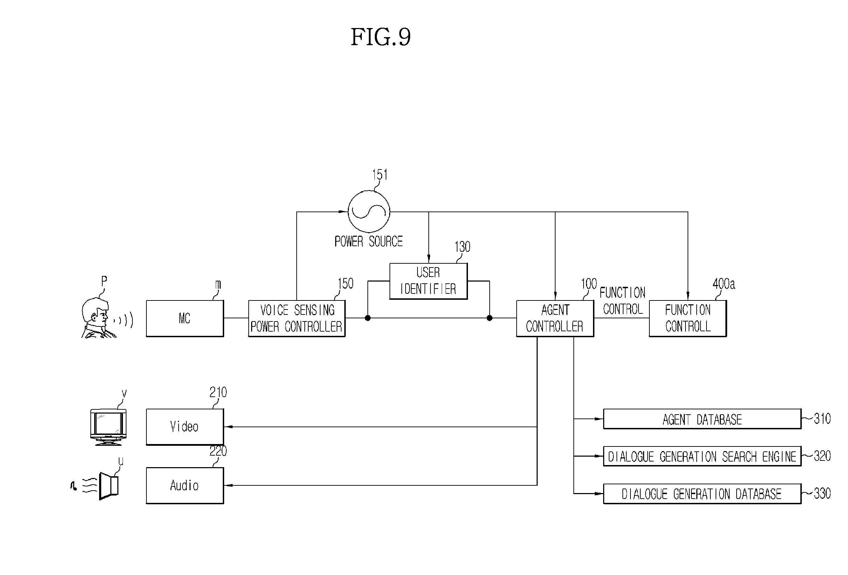

In an embodiment of the present disclosure, the display device D may further include a power controller, particularly a voice sensing power controller 150, as illustrated in FIG. 9.

When the display device D is placed in standby state using standby power, if the user inputs a user message using an input such as the microphone m, the voice sensing power controller 150 senses the input of the user message, generates a power control signal, and provides the power control signal to a power source 151. Then power is supplied to each part of the display device D, for example, the user identifier 130, the agent controller 100, or the function controller 400a, thereby switching the display device D from the standby mode to active mode.

The display device D identifies a user based on the user message and displays an agent or an agent message on a screen, or displays the agent on the screen and outputs the agent message by voice.

Because the display device D is switched to the active mode upon receipt of a user's voice command in the standby mode and thus displays an agent on a screen and outputs an agent message, the agent and the agent message can be output quickly, while power is saved.

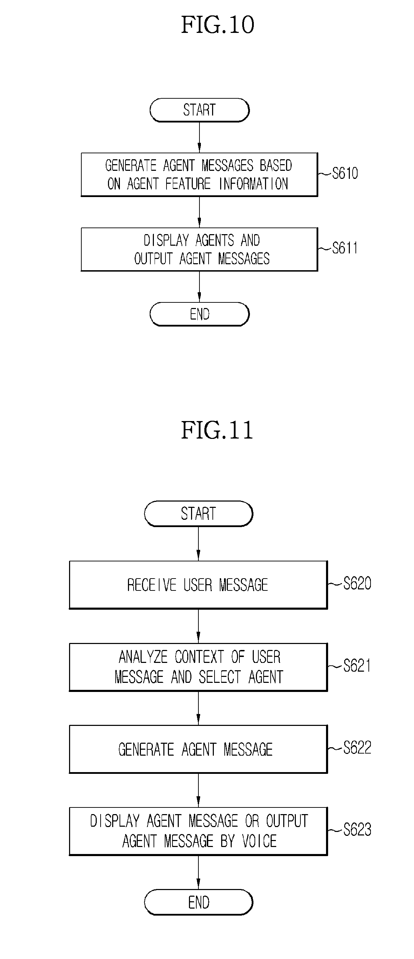

Now a description will be given of methods of controlling the display device according to various embodiments of the present disclosure with reference to FIGS. 10 to 22. Referring to FIG. 10, a method of controlling the display device D according to an embodiment of the present disclosure includes generation of a dialogue message for an agent according to feature information about the agent, for example, the personality, speech style, speech contents, etc. of the agent (operation S610) and displaying the generated agent dialogue message on a screen or outputting the generated agent dialogue message by voice, while displaying the agent on the screen (operation S611). One or more agents may be displayed on the screen and one or more agent messages may be displayed on the screen or output by voice in the display device D. Meanwhile, a plurality of agents have different feature information.

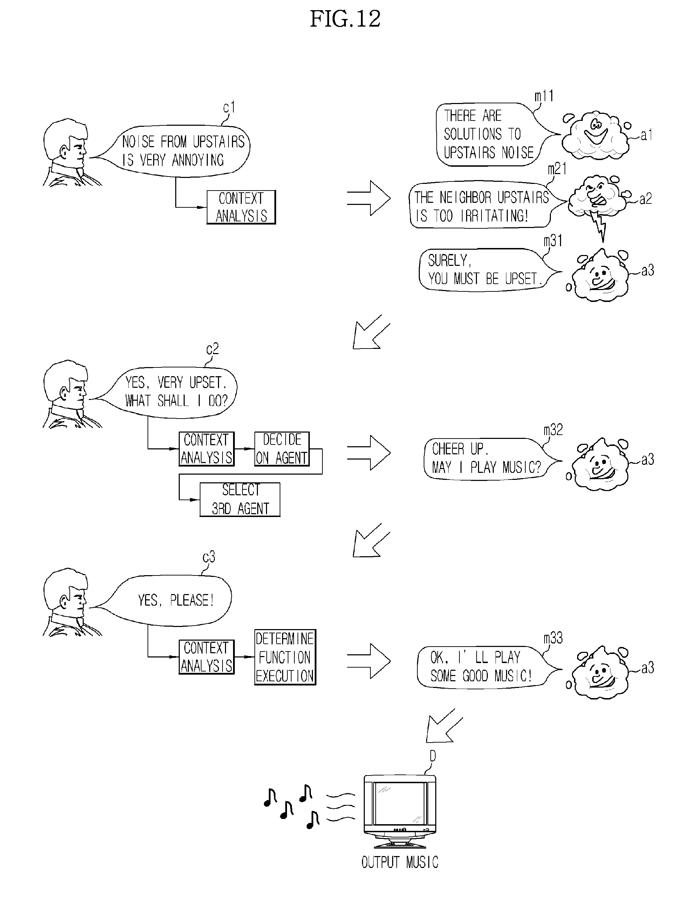

In an embodiment of the display device controlling method, referring to FIGS. 11 and 12, the user may first input a user message to the display device D (operation S620). For example, the user may input a user message such as "Noise from upstairs is very annoying" (c1) by voice through the microphone, as illustrated in FIG. 12. As described before, the user may input the user message by voice, through a keyboard or a remote controller, or by other input.

The display device D analyzes the input user message c1 (operation S621) and generates agent dialogue messages m11, m21, and m31 appropriate for the user message c1 (operation S622).

The agent dialogue messages m11, m21, and m31 may be different according to personality traits pre-assigned to the agents. For example, the message m11 giving a practical solution may be generated for the first agent a1, the message 21 that emotionally sympathizes with the user may be generated for the second agent a2, and the message m31 carrying contents that soothe the user may be generated for the third agent a3.

If the user message c1 is input by voice, the voice message may be converted to a text message by an STT technology and then an appropriate agent dialogue message may be generated through content analysis of the text message.

In order to generate an agent dialogue message appropriate for the contents of the user message, the user's intention, and the context, the display device D may refer to the dialogue generation database 320 or use the dialogue generation search engine 330. Alternatively or additionally, the display device D may use a probabilistic model such as a Bayesian network in generating an agent message.

After the agent dialogue messages m11, m21, and m31 are generated, the display device D outputs the agent messages m11, m21, and m31 visually or audibly, or both (S623). The display device D may also display the plurality of agents a1, a2, and a3 along with the agent messages m11, m21 and m31 on the screen.

The plurality of agents a1, a2, and a3 displayed on the screen may be a plurality of predetermined agents or a plurality of agents selected based on the analyzed user message and the agent database 310 after step s621 of analyzing the user message. Or the plurality of agents a1, a2, and a3 may be agents that have been displayed on the screen of the display device D before the input of the user message.

As a consequence, the plurality of agents a1, a2, and a3 and the different agent messages m11, m21, and m31 are displayed, for example, on the video output unit 210 of the display device D in response to the user message c1, as illustrated in FIG. 12.
In an embodiment of the present disclosure, after the plurality of agent messages m11, m21, and m31 are displayed or output by voice as described above, the user may respond to at least one of the agent messages m11, m21, and m31 by a message c2, for example, "Yes, very upset. What shall I do?", as illustrated in FIG. 12.

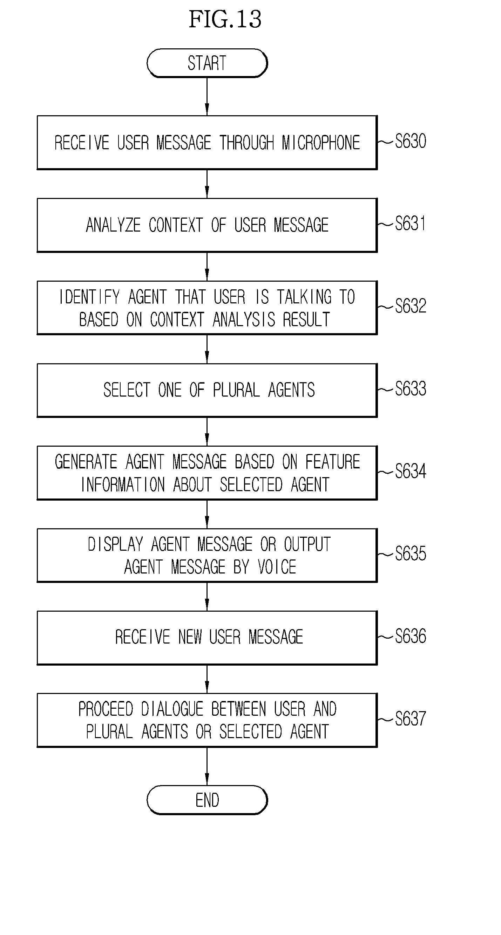

As illustrated in FIG. 13, the user may input the user message c2 through the microphone (operation S630). As described before, the user may input the user message c2 through a keyboard or other input.

The display device D analyzes the context of the input user message c2 (operation S631), determines what agent the user responds to with the user's message c2, that is, what agent the user wants to talk with, based on the context analysis result (operation S632), and selects at least one of the plurality of agents a1, a2, and a3 (operation S633). For example, the third agent a3 may be selected as illustrated in FIG. 12.

In some embodiments, the display device D may refer to the agent database 310 in order to determine what agent the user wants to talk with and may select an agent with a different personality, for example, an agent having a different speech style stored in the agent database 310 instead of an agent displayed on the screen.

The display device D may select a plurality of agents from among the plurality of agents a1, a2, and a3 displayed on the screen according to the analysis result of the user message. When needed, the display device D may prioritize the selected plurality of agents. The priority levels of the selected agents may be used in determining the display positions or voice output order of agent messages.

When at least one of the plurality of agents, for example, the third agent a3 is selected, the display device D generates an agent message m32 for the third agent a3 using the feature information about the selected at least one agent and the context analysis result (operation S634).

For example, the third agent a3 generates the response message m32 appropriate for the user message c2 according to a personality trait assigned to the third agent a3.
In an embodiment of the present disclosure, the response message m32 may be a query message including at least one query asking whether to control an operation of the display device D, as illustrated in FIG. 12. That is, referring to FIG. 12, for example, the response message m32 may include a query asking whether to play music in the display device D, such as "May I play music?".

The agent message m32 of the selected at least one agent a3 may be displayed on the screen or may be converted to voice and then output (operation S635).

After the agent message m32 of the selected at least one agent a3 is output, the user may input a response to the agent message m32, for example, a user message c3 such as "Yes, please" through the microphone or other input (operation S636). The display device D may generate a response message m33 to the input new user message c3.
In this manner, a dialogue may be made between the user and the selected agent a3 (operation S637).

In an embodiment of the present disclosure, if an agent message of the selected at least one agent a3 is a query message, the display device D performs an asked operation, for example, plays music. As far as it is determined that the user message c3 includes an operation control command regarding an asked operation, the display device D may perform the asked operation.

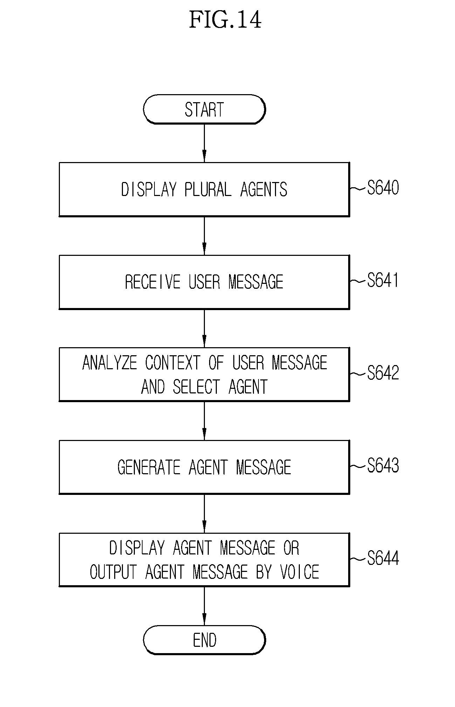

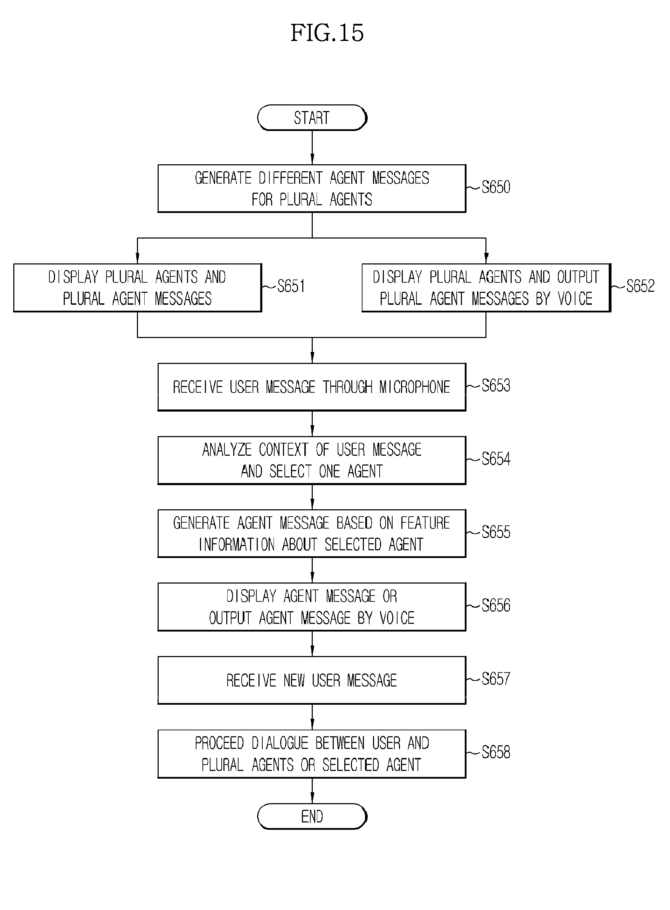

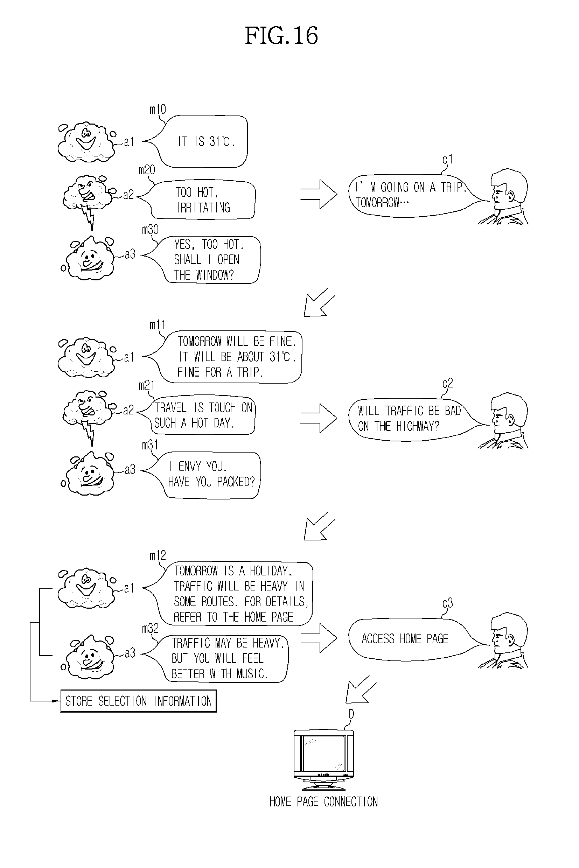

In an embodiment of the present disclosure, referring to FIG. 14, the display device D may first display a plurality of agents (operation S640). Along with the plurality of agents a1, a2, and a3, the agent messages m1, m2, and m3 of the agents a1, a2, and a3 may be displayed on the screen or output by voice. Upon receipt of a user message through the microphone (operation S641), the display device D analyzes the context of the user message and selects at least one agent according to the analysis result (operation S642). The display device D generates a dialogue message for the selected agent (operation S643) and outputs the agent message of the selected at least one agent through the video output unit 210 or the audio output unit 220 (operation S644).
The above operation will be detailed with reference to FIGS. 15 and 16. As illustrated in FIG. 15, different agent messages are generated for the plurality of agents (operation S650).

The different agent messages may be generated according to a predetermined setting. For example, the different agent messages may be generated based on information about an ambient environment, for example, a time zone, a date, weather, latest news, or a predetermined user schedule, or agent messages pre-stored by the user or a display device provider. The agent messages are not based on the analysis result of a user message.

As illustrated in FIGS. 15 and 16, the display device D displays specific agent messages m10, m20, and m30 together with the plurality of agents a1, a2, and a3 on a screen (operation S651) or the display device D outputs the agent messages m10, m20, and m30 by voice (operation S652). In this case, the agent messages mio, m20 and m30 may deliver different contents, for example, as illustrated in FIG. 2 or FIG. 16.

As illustrated in FIGS. 15 and 16, after the plurality of agents a1, a2, and a3 are displayed, the display device D receives a specific user message c1 from the user (operation S653).

The received user message c1 may be an answer to at least one of the plurality of agent messages mio, m20 and m30 displayed on the screen of the display device D, or may have nothing to do with the plurality of agent messages mio, m20 and m30 output from the display device D, like the user message c1 "I am going on a trip tomorrow".

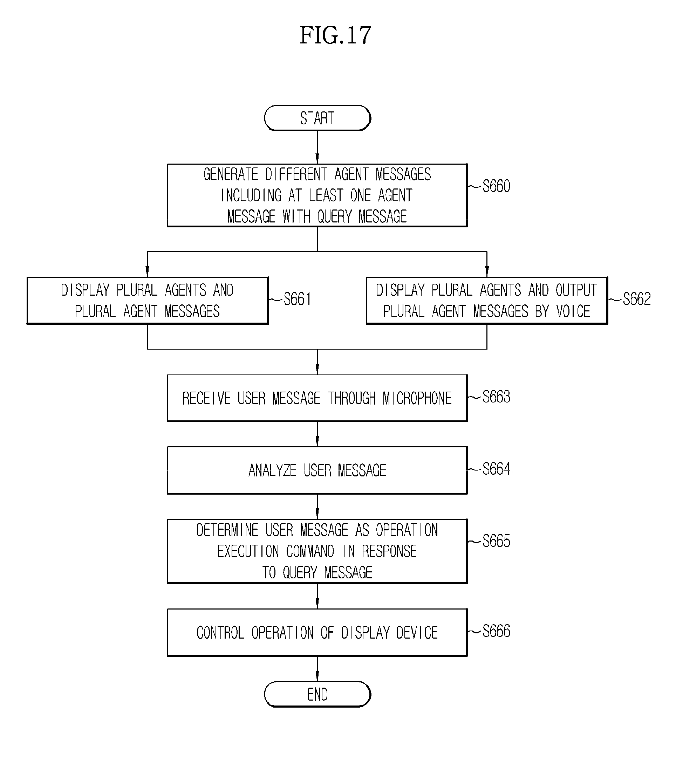

Upon receipt of the user message c1 from the user (operation S653), the display device D analyzes the user message and selects at least one agent appropriate for the user message based on the context analysis result (operation S654). As illustrated in FIG. 17, all of the agents a1, a2, and a3 may be selected. If the user message c1 has nothing to do with the plurality of agent messages m10, m20, and m30 output from the display device D, no agent may be selected.

The display device D generates agent messages m11, m21, and m31 for the selected agents based on the feature information of the selected agents (operation S655) and displays the agent messages m11, m21, and m31 along with the agents a1, a2, and a3 or output the agent messages m11, m21, and m31 by voice (S656).

If the user inputs a new user message c2 after reading or hearing the agent messages m11, m21 and m31 (operation S657), the display device D determines what agent message among the agent messages m11, m21, and m31 the user message c2 responds to by analyzing the user message c2 in the same manner as described above and thus selects at least one agent a1 and a3 as illustrated in FIG. 16. The display device D generates agent messages m12 and m32 for the selected agents a1 and a3 so that the agents a1 and a3 may make a dialogue with the user (operation S658).

The at least one agent message m12 output in the same manner as described before may be a query message. If the agent message m12 delivers contents requesting execution of an asked operation, the display device D may perform the asked operation, for example, access to a home page.

As illustrated in FIGS. 12 and 16, at least one of the plurality of agent messages m11, m21, and m31 displayed on the screen or output by voice may be a query message including a query.

This will be described in greater detail with reference to FIG. 17. A plurality of different agent messages may be generated and at least one of the different agent messages may be a query message including a query asking whether to perform a specific operation in the display device D (operation S660). For example, the query may ask whether to play music or access a home page, as illustrated in FIGS. 12 and 16. Or the query may be about whether to perform almost any operation of the display device D, for example, whether to switch a channel, control volume, or power off. Or the query may be about whether to control other electronic devices, for example, electronic appliances such as lighting, an audio player, or a refrigerator.

The at least one agent message being a query message may be displayed along with the plurality of agents on the screen (operation S661) or may be output by voice (operation S662).

Upon receipt of a user message from the user after the agent messages are output (operation S663), the display device D analyzes the user message as described before (operation S664).

If the user message turns out to be an answer to a question asking whether to perform a specific operation, that is, includes an operation execution command like the third user message c3 of FIG. 12 or FIG. 16 as a result of the user message analysis (operation S665), the display device D may perform the asked operation (operation S666). In this case, the display device D may generate a control command for another electronic device and transmits the control command to the electronic device, when needed. Accordingly, the display device D may ask about the user's intention and operate as intended by the user.

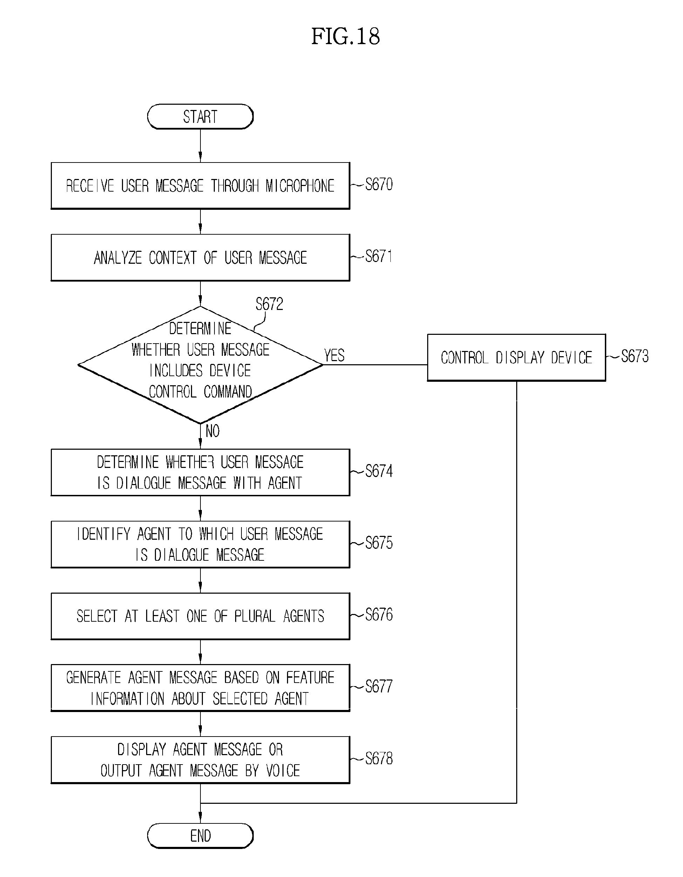

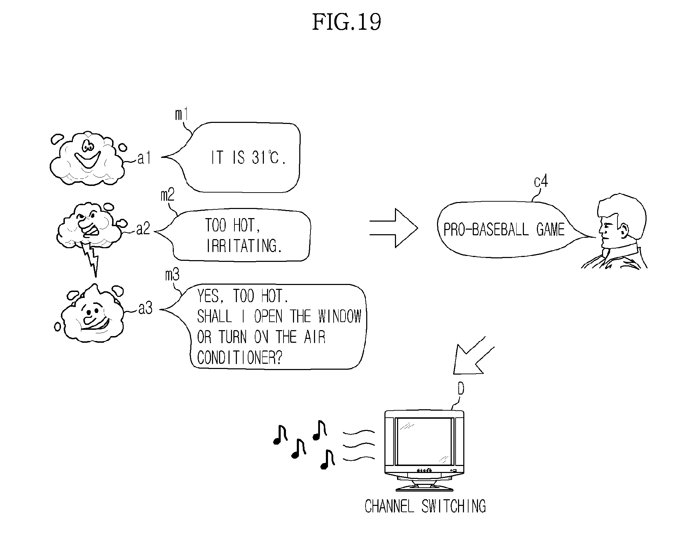

Referring to FIGS. 18 and 19, when the received user message includes a device control command, the display device D may be controlled according to an embodiment of the present disclosure.

As illustrated in FIG. 18, when the user first inputs a user message through the microphone (operation S670), the display device D analyzes the context of the input user message (operation S671) and determines whether the user message includes a device control command (operation S672).

As described before, the agents a1, a2, and a3 may output the agent messages m1, m2, and m3 before the user message is input, as illustrated in FIG. 19.

If the user message includes a device control command, for example, a channel switch command or a volume control command, the display device D is controlled by the device control command of the user (operation S673), as illustrated in FIGS. 18 and 19.

Particularly, if a user message c4 includes contents about a specific program such as "pro-baseball broadcasting" as illustrated in FIG. 19, the display device D may recognize from a context analysis that the user message indicates a specific program, search for a channel that broadcasts a pro-baseball game according to the recognized contents, generate a channel switch command, and thus switch a broadcast channel.

If the user message does not include a device control command, the display device D selects at least one agent appropriate for the user message, generates an agent message for the selected agent, and outputs the agent message, as previously described (operations S674, S675, S676, S677, and S678).

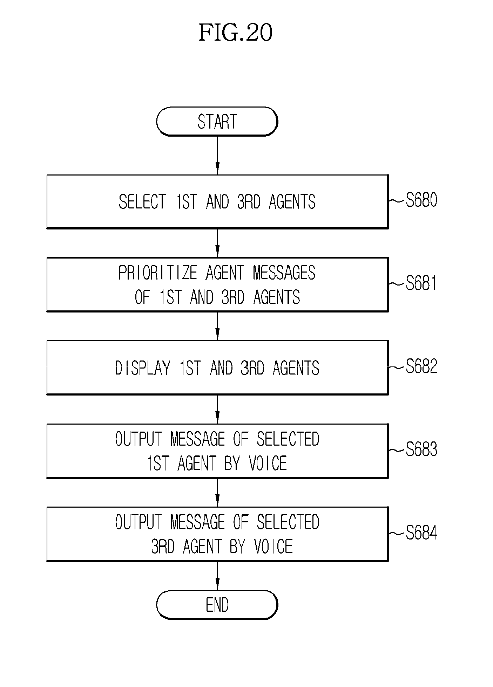

In an embodiment of the present disclosure, the display device D may prioritize a plurality of agents and may control output of the agents and agent messages in order of the priority levels of the agents, as illustrated in FIG. 20.

For example, it is assumed that two agents, the first and third agents a1 and a3 are selected from among the plurality of agents a1, a2, and a3, for the user message c2 as illustrated in FIG. 16 (operation S680).

Then the display device D may assign priority levels to the selected first and third agents a1 and 3. In this case, the priority levels of the agents a1 and a3 may be determined according to their appropriateness for the user message. That is, if the first agent a1 is more appropriate for the user message, a higher priority level may be assigned to the first agent a1 than the third agent a3 (operation S681). The priority levels of the agents a1 and a3 may be determined according to the selection frequencies of the agents a1 and a3 analyzed by the afore-described agent analyzer 500.

The first and third agents a1 and a3 are displayed on the screen according to their priority levels (operation S682). Herein, the higher-priority first agent a1 may be displayed at the top of the screen, whereas the lower-priority third agent a3 may be displayed at the bottom of the screen.

The dialogue message m12 of the first agent a1 having the higher priority level than the third agent a3 is first output by voice (operation S683), followed by voice output of the dialogue message m32 of the third agent having the lower priority level than the first agent a1 (operation S684). That is, the agent messages may be sequentially output according to the priority levels assigned to the agents.

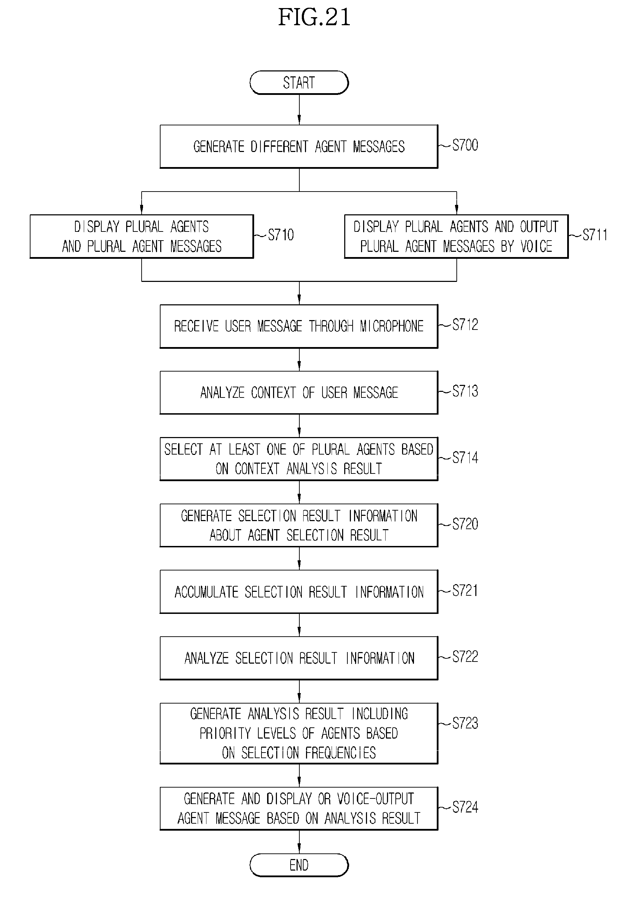

In an embodiment of the present disclosure, information about an agent selected by the user or the agent selector 113 of the display device D may be analyzed and then the agent selector 113 may select an agent based on the analysis result, as illustrated in FIG. 21.

Referring to FIG. 21, different agent messages are generated for a plurality of agents (operation S700). The plurality of agents and the agent messages may be displayed together on the screen (operation S710) or the plurality of agents may be displayed, while the agent messages may be output by voice (operation S711).

When the user inputs a user message through the microphone (operation S712), the display device D analyzes the context of the input user message (operation S713) and selects at least one of the plurality of agents based on the context analysis result (operation S714).

Information about the agent selection result, that is, selection result information is generated and stored in a storage space of the external information processor E or the display device D (operation S720). Selection result information may be stored for each identified user.

A large amount of selection result information may be accumulated in the information processor E or the display device D with passage of time (operation S721). If a large amount of selection result information is accumulated, the information processor E or the display device D analyzes the selection result information (operation S722).
The information processor E or the display device D may analyze the selection result information, for example, at every predetermined time interval or according to the amount of the accumulated selection result information. It is also possible to analyze the selection result information upon user request.

To analyze the selection result, the information processor E or the display device D may calculate selection frequencies simply by counting selection numbers or using a Bayesian network or a machine learning technique.

The information processor E or the display device D generates an analysis result of selection results and stores the analysis result in a storage medium of the external information processor E or the display device D (operation S723).

The display device D then selects at least one agent matching the user message based on the stored analysis result and generates and outputs an agent message for the selected at least one agent (operation S724).

Therefore, the user may make a dialogue with an agent matching the user's preferences or needs in a long term.

As is apparent from the above description, the display device and the method of controlling the display device enable a user to have a dialogue with at least one of a plurality of agents displayed on the display device. Accordingly, the user interface of the display device may be improved.
Particularly, as agents having different personalities, contents, and speech styles are displayed, the user may make a rich dialogue with the agents and select a desired agent consciously or subconsciously. Therefore, the display device may provide an appropriate agent to the user.

In addition, as the user talks with agents having different personalities, the user is tricked into feeling as if making a dialogue with a plurality of persons. Thus, the user's interest is increased in the dialogue and the interaction between the user and the agents is enhanced.

Furthermore, as the user uses the display device over a long term, an agent having a personality, contents, and a speech style matching the user is mainly displayed on the display device. Accordingly, an agent customized to the user is provided.

The above-described embodiments may be recorded in computer-readable media including program instructions to implement various operations embodied by a computer. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of computer-readable media include magnetic media such as hard disks, floppy disks, and magnetic tape; optical media such as CD ROM disks and DVDs; magneto-optical media such as optical disks; and hardware devices that are specially configured to store and perform program instructions, such as read-only memory (ROM), random access memory (RAM), flash memory, and the like. The computer-readable media may also be a distributed network, so that the program instructions are stored and executed in a distributed fashion. The program instructions may be executed by one or more processors. The computer-readable media may also be embodied in at least one application specific integrated circuit (ASIC) or Field Programmable Gate Array (FPGA), which executes (processes like a processor) program instructions. Examples of program instructions include both machine code, such as produced by a compiler, and files containing higher level code that may be executed by the computer using an interpreter. The above-described devices may be configured to act as one or more software modules in order to perform the operations of the above-described embodiments, or vice versa.
Although a few embodiments of the present invention have been shown and described, it would be appreciated by those skilled in the art that changes may be made in these embodiments without departing from the principles of the invention, the scope of which is defined in the claims.

## Claims

1. A display device comprising:
an input unit to receive a user message;
a video output unit to display a plurality of agents; and
a controller to display at least one agent message for at least one of the plurality of agents generated based on an analysis result of the user message, on the video output unit,
wherein different agent messages are generated for each of the plurality of agents according to agent feature information about the plurality of agents.

2. The display device according to claim 1, further comprising an audio output unit to output the generated at least one agent message by at least one of voice and sound.

3. The display device according to claim 1 or 2, wherein if the user message is a control command to control the display device, an operation indicated by the control command is performed.

4. The display device according to claim 1, 2 or 3, wherein the at least one agent message includes at least one query asking whether to perform an operation of the display device and if it is determined based on the analysis result of the user message received through the input unit that the user message includes an answer to the query, the operation is performed.

5. The display device according to any one of the preceding claims, wherein a user is identified according to the analysis result of the user message.

6. The display device according to any one of the preceding claims, wherein the controller displays the at least one agent message for the at least one of the plurality of agents on the video output unit, based on the analysis result of the user message.

7. The display device according to any one of the preceding claims, wherein the controller displays the generated at least one agent message on the video output unit according to a priority level of the at least one agent assigned based on the analysis result of the user message.

8. The display device according to any one of the preceding claims, wherein the agent feature information includes information about speech styles of the agents.

9. A method of controlling a display device, the method comprising:
displaying a plurality of agents;
receiving a user message;
analyzing the received user message;
generating at least one agent message for at least one of the plurality of agents based on an analysis result of the user message; and
performing at least one of displaying the generated at least one agent message and outputting the generated at least one agent message by voice.

10. The method according to claim 9, further comprising determining, based on the analysis result of the user message, if the user message includes a device control command to control the display device, and if the user message includes a device control command, controlling the display device according to the device control command.

11. The method according to claim 9 or 10, wherein the at least one agent message includes at least one query asking whether to perform an operation of the display device.

12. The method according to claim 9, 10 or 11, wherein the generation of at least one agent message comprises:
determining an agent with which the user message is a dialogue message from among the plurality of agents based on the analysis result of the user message and selecting the at least one of the plurality of agents based on a determination result; and
generating the at least one agent message based on agent feature information about the selected at least one agent.

13. The method according to any one of claims 9 to 12, wherein the generation of at least one agent message comprises:
prioritizing the selected at least one agent based on the analysis result of the user message; and
controlling display of the generated at least one message according to at least one of a priority level assigned to the selected at least one agent and sequential output of the generated at least one message by voice according to the priority level assigned to the selected at least one agent.

14. The method according to any one of claims 9 to 13, further comprising:
generating selection result information about a result of selecting the at least one agent; and
analyzing the selection result information and generating agent analysis results for the plurality of agents by performing at least one of selecting at least one of the plurality of agents and prioritizing the plurality of agents.

15. The method according to any one of the claims 9 to 14, further comprising, if it is determined based on the analysis result of the user message that the user message is an operation control command regarding an operation of the display device, operating the display device according to the operation control command.
